# EUROPEAN PATENT APPLICATION

(11) **EP 1 170 607 A1**
(43) Date of publication of application: **09.01.2002**
(21) Application number: 01305793.0
(22) Date of filing: 04.07.2001
(51) Int. Cl.: G02B 6/34

(54) **Optical demultiplexer/multiplexer**

(30) Priority: 04.07.2000 JP 2000202244
(71) Applicant: MITSUBISHI GAS CHEMICAL COMPANY, INC., Chiyoda-ku, Tokyo (JP)
(72) Inventor: Takano, Toshihiko, 1-1 Niijuku,6-chome, Katsushika-ku,Tokyo (JP); Jinnai, Kuniaki. c/o Mitsubishi Gas Chemical Inc., Tokyo (JP)
(74) Representative: Nicholls, Michael John

(57) **Abstract**

An optical demultiplexer/multiplexer, for a signal of n wavelengths λ1 to λ4 comprising:
a filter unit in which n-1 wavelength selective transmission/reflection optical filters F0 to F2 are disposed in parallel on two opposite sides of a block;
an external light input/output port E0 disposed outside the filter unit and positioned on the reflecting light axis of the filter F0; and
a plurality of light input/output ports P1 to P3 disposed on the transmission light axes of filter F1 and F2 and on the reflecting light axis of filter F2.

The device further comprises transmission/reflection optical filter F0 which transmits lights of all wavelengths λ2 to λ4 corresponding to the light input/output ports P1 to P3 but reflects light of wavelength λ1.

## Description

### Field of the Invention

The present invention relates to an optical demultiplexer/multiplexer used for multiplexing or demultiplexing a plurality of signal lights which are different in wavelength from each other.

### Prior Art of the Invention

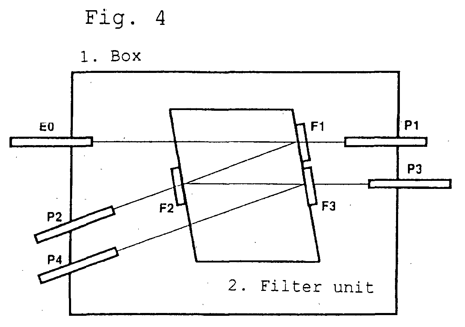

There have been proposed various systems with regard to an optical demultiplexer/multiplexer having the functions of multiplexing a plurality of signal lights having different wavelengths or conversely demultiplexing a plurality of multiplexed signal lights to each wavelength component. As one of the proposals, a system using a selective transmission/reflection optical filter is known. Fig. 4 is an illustration showing an example of an optical demultiplexer/multiplexer according to a conventional system using a selective transmission/reflection optical filter.

### Summary of the Invention

It is an object of the present invention to provide an optical demultiplexer/multiplexer using a plurality of selective transmission/reflection optical filters in combination, which curbs a light beam diffusion by minimizing an optical path length.

It is another object of the present invention to provide an optical demultiplexer/multiplexer having a structure which enables to minimize the size of a device as a whole while maintaining a high performance.

According to the present invention, there is provided an optical demultiplexer/multiplexer for wavelengths of (n), obtained by improving an optical demultiplexer/multiplexer for wavelengths of (n-1) comprising a filter unit in which, (n-2) pieces of, provided that n is an integer of 4 ≤ n ≤ 9, selective transmission/reflection optical filters (F(k)), in which k is an integer of 1 ~ (n-2), are disposed on a plane A and a plane B arranged in parallel so as to be successionally connected with reflecting light axes, an external light input/output port (E(0)) disposed outside the filter unit and positioned on the reflecting light axis of the selective transmission/reflection optical filter F(1) and (n-1) pieces of light input/output ports (P(k)), in which k is an integer of 1 ~ (n-1), disposed on the transmission light axes of the selective transmission/reflection optical filters F(k) and on the reflecting light axis of F(n-2),
wherein the improvement is comprising a selective transmission/reflection optical filter (F0) which transmits lights of all wavelengths corresponding to the light input/output ports (P(k)) but reflects lights of wavelengths other than the above wavelengths on the light axis between the external light input/output port (E0) and the selective transmission/reflection optical filter (F(1)) and a light input/output port (P0) on the reflection light axis of the selective transmission/reflection optical filter (F0).

### Brief Description of Drawings

Fig.1 is a plane view showing an example of the optical demultiplexer/multiplexer of the present invention.

Fig.2 is an illustration showing properties of the selective transmission/reflection optical filters in Example 1.

Fig.3 is a plane view showing an example of the optical demultiplexer/multiplexer of the present invention.

Fig.4 is a plane view showing an example of a conventional optical demultiplexer/multiplexer.

### Detailed Description of the Invention

In the present invention, symbols in the drawings have the following meanings; E0: external light input/output port, F0 ~ F3: selective transmission/reflection optical filter and P0 ~ P4: light input/output port.

A known dielectric multilayer filter is preferred as the selective transmission/reflection optical filter in the present invention. The dielectric multilayer filter is produced, for example, by laminating low refractive index thin films (silicon dioxide, etc.) and high refractive index thin films (titanium dioxide, etc.) alternately so as to form several tens of laminated layers. It is possible to obtain a desired short-wave pass filter (SPF), a desired long-wave pass filter (LPF) or a desired band-pass filter by controlling these laminated film layers precisely. The dielectric multilayer filter reflects almost 100 % of lights in a reflection region and has a transmittance near to 100 % in a transmission region so that the dielectric multilayer filter is remarkably preferred.

As a material for the filter unit, there can be used metals, ceramics, plastics and the like. Preferred examples thereof include brass, stainless steel, machinable ceramics, epoxy resins and the like. The inside of the filter unit where a light is passed is provided with a space. When a material which is transparent in a wavelength region to be used such as quartz glass is used, an external portion alone may be processed for use while the inside is retained as it is.

### Examples

The optical demultiplexer/multiplexer of the present invention will be explained more in detail with reference to Examples hereinafter.

The following examples are described for explaining concretely, while these examples shall not limit embodiments of the present invention and the scope of the invention.

### Example 1

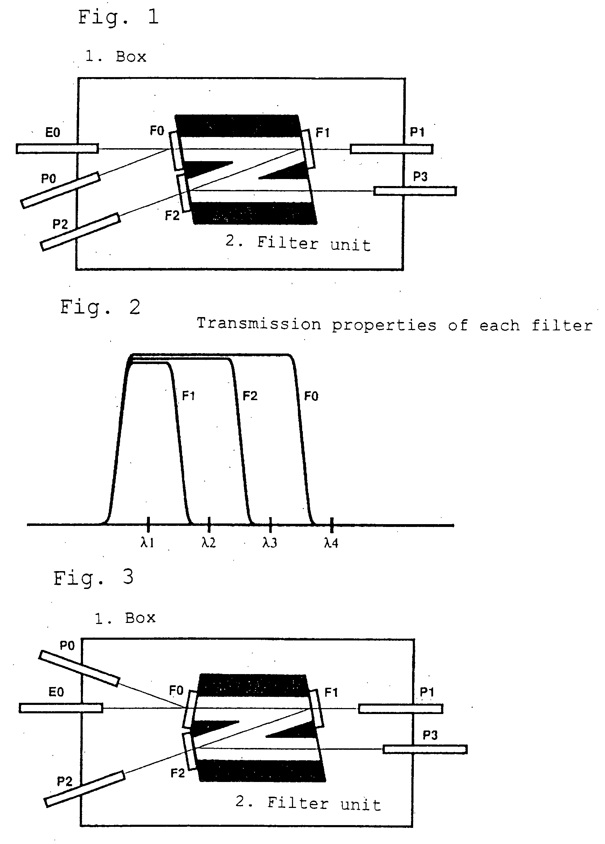

Fig.1 is a plane view showing an optical demultiplexer/multiplexer for four wavelengths, which is an example of the present invention.

In Fig.1, a filter unit (2) made of stainless steel is fixed in the central portion of a box (1). In the filter unit (2), a plane A and a plane B are arranged in parallel in its end portions and selective transmission/reflection optical filters (F0, F1 and F2) are closely mounted on the plane A or the plane B. A space is provided in an inside portion of the filter unit where a light is to be passed. The plane A and the plane B are inclined at an angle of 10 degree to the sides of the box (1).

Light input/output ports (P1, P2 and P3) and an external light input/output port (E0) are positioned on transmission light axes of the selective transmission/reflection optical filters so as to correspond to the fixed positions of the selective transmission/reflection optical filters and fixed to the box (1) i.e. both outer sides of the filter unit (2). A light input/output port (P0) is positioned on the reflection light axis of the selective transmission/reflection optical filter and fixed to the box (1). These light input/output ports are composed of an optical fiber and a collimator lens attached to its end portion, while the optical fiber and the collimator lens are not shown in Fig.1.

A case in which a light prepared by multiplexing four kinds of wavelengths (λ1, λ2, λ3 and λ4, provided that λ1 < λ2 < λ3 < λ4) is entered from an external light input/output port (E0) will be explained as an example.

Each of selective transmission/reflection optical filters (F0, F1 and F2) has properties shown in Fig.2. A light entered from outside is led to a selective transmission/reflection optical filter F0 (SPF) fixed on a plane A, a light of wavelength λ4 is reflected with the selective transmission/reflection optical filter F0, and the reflected light is led to a light input/output port (P0). The resultant light (λ1 + λ2 + λ3) transmitted through the selective transmission/reflection optical filter F0 is led to a selective transmission/reflection optical filter F1 (SPF) fixed on a plane B, a light of wavelength λ1 is transmitted through the selective transmission/reflection optical filter F1, and the transmitted light is led to a light input/output port (P1).

The reflected light (λ2 + λ3) from the selective transmission/reflection optical filter F1 is led to a selective transmission/reflection optical filter F2 (SPF) fixed on the plane A, a light of wavelength λ2 is transmitted through the selective transmission/reflection optical filter F2 and the transmitted light is led to a light input/output port (P2). The reflected light (λ3) from F2 passes through the plane B and reaches to a light input/output port (P3). In this way, the lights of four kinds of wavelengths λ1, λ2, λ3 and λ4 are demultiplexed to the light input/output ports of P0, P1, P2 and P3 respectively.

When a light-travelling direction is adverse, this device works as a multiplexer.

As a concrete combination of wavelengths, a combination of wavelengths of λ1: 1,515 nm, λ2: 1,535 nm, λ3: 1,555 nm and λ4: 1,575 nm was used to prepare an optical demultiplexer/multiplexer. Each wavelength light was entered from E0 and measured at each port. In this case, there were obtained fine results of the maximum insertion loss of ≥ -1.5 dB and an isolation of ≤ -20 dB.

The characteristic features of the present invention exist in that the selective transmission/reflection optical filter (F0) and the light input/output port (P0) are provided before the liaht from the external light input/output port (E0) reaches to the selective transmission/reflection optical filter (F1).

According to the above structure, the sum total of optical path lengths to the number of wavelengths to be multiplexed or demultiplexed can be shortened. As a result, the diffusion of a light beam is curbed to a minimum so that fine properties can be obtained. Further, another advantage is that the size of a device can be reduced to a width (W) as a minimum due to a rational layout design.

Example 1 shows an example of a combination of SPFs (short-wave pass filters), while the similar functions can be attained by using LPFs (long-wave pass filters) or BPFs (band-pass filters). For demultiplexing or multiplexing lights of n kinds of wavelengths, at least (n-1) pieces of selective transmission/reflection optical filters are reauired. For the purpose of improving isolation or the like, it is also effective to further add a selective transmission/reflection optical filter before the light input/output ports (P(k)).

In the structure of the present invention, the upper limit of the number of wavelengths which can be demultiplexed or multiplexed'depends upon properties of a selective transmission/reflection optical filter to be used and a margin of a system so that it can not be argued simply. However, it is generally assumed that the limit of the number of wavelengths is about 9 for attaining a preferable demultiplexing/multiplexing performance.

No special limitation is imposed on the angle of incidence from the external light input/output port to the plane A of the optical filter unit. However, it is preferred to select an angle of 15 degree or less as an inclined incident angle in view of filter properties.

### Example 2

Fig.3 is a plane view of an optical demultiplexer/multiplexer for four wavelengths in Example 2.

In the present example, part of the plane A of the filter unit in Example 1 is inclined in the opposite direction at an angle of 10 degree to the sides of the box, as shown in Fig. 3. In this form, a light input/output port (P0) is provided at the side opposite to the side of the other light input/output ports from a straight line of from the external light input/output port (E0) to F1.

The system of demultiplexing and multiplexing is the same as that of Example 1. However, the form of the present example is effective when it is difficult as a layout problem of the inside of the box to dispose the light input/output port (P0) by using the form of Example 1.

### Effect of the Invention

As is evident from Examples and Detailed Description of the Invention, the optical demultiplexer/multiplexer of the present invention is remarkably high-performance and is compact so that it can be preferably used for a WDM transmission device and the like.

## Claims

1. An optical demultiplexer/multiplexer for wavelengths of (n), obtained by improving an optical demultiplexer/multiplexer for wavelengths of (n-1) comprising
a filter unit in which, (n-2) pieces of, provided that n is an integer of 4 ≤ n < 9, selective transmission/reflection optical filters (F(k)), in which k is an integer of 1 ~ (n-2), are disposed on a plane A and a plane B arranged in parallel so as to be successionally connected with reflecting light axes,
an external light input/output port (E(0)) disposed outside the filter unit and positioned on the reflecting light axis of the selective transmission/reflection optical filter F(1) and
(n-1) pieces of light input/output ports (P(k)), in which k is an integer of 1 ~ (n-1) disposed on the transmission light axes of the selective transmission/reflection optical filters F(k) and on the reflecting light axis of F(n-2),
wherein the improvement is comprising a selective transmission/reflection optical filter (F0) which transmits lights of all wavelengths corresponding to the light input/output ports (P(k)) but reflects lights of wavelengths other than the above wavelengths on the light axis between the external light input/output port (EO) and the selective transmission/reflection optical filter (F(1)) and a light input/output port (P0) on the reflection light axis of the selective transmission/reflection optical filter (F0).

2. An optical demultiplexer/multiplexer according to claim 1, which has a structure in which the filter unit is composed of a block made of metal, ceramics, or plastics, the block has a space where a light is to be passed and the selective transmission/reflection optical filters (F(k)) are fixed on the surface of the block.

3. An optical demultiplexer/multiplexer according to claim 1, wherein the selective transmission/reflection optical filter is a dielectric multilayer filter.
